# EUROPEAN PATENT SPECIFICATION

(11) **EP 3 513 694 B1**
(45) Date of publication and mention of the grant of the patent: **21.07.2021**
(21) Application number: 17788323.8
(22) Date of filing: 12.09.2017
(51) Int. Cl.: A47J 31/44

(54) **ADJUSTABLE BEVERAGE DISCHARGE DISPOSITION, BEVERAGE PREPARATION MACHINE WITH SAID BEVERAGE DISCHARGE DISPOSITION AND PROCESS OF OPERATION OF SAID MACHINE**
VERSTELLBARE VERTEILUNGSVORRICHTUNG FÜR GETRANKE, GETRÄNKEBEREITUNGSMACHINE MIT SOLCHER VERTEILUNGSVORRICHTUNG UND BETRIEBSVERFAHREN EINER SOLCHEN MASCHINE
AGENCEMENT DE DISTRIBUTION DE BOISSONS RÉGLABLE, MACHINE DE PRÉPARATION DE BOISSONS COMPRENANT LEDIT AGENCEMENT DE DISTRIBUTION DE BOISSONS, ET PROCÉDÉ DE FONCTIONNEMENT DE LADITE MACHINE

(30) Priority: 13.09.2016 PT 2016109612
(43) Date of publication of application: 24.07.2019
(73) Proprietor: Novadelta-Comércio e Industria de Cafés, Lda., 1950-041 Lisboa (PT)
(72) Inventor: NABEIRO, Rui Miguel, 7370-112 Campo Maior (PT); DE FIGUEIREDO BRANCO, João André, 1885-091 Moscavide (PT)
(74) Representative: Ferreira Pinto, Francisca
(86) International application number: PCT/PT2017/050021
(87) International publication number: WO 2018/052330

(56) References cited:
- EP-A1- 1 716 796
- EP-A1- 2 407 068
- EP-A1- 2 497 397
- WO-A2-2005/102126
- CN-U- 203 693 334
- CN-U- 203 802 281

## Description

### Field of the invention

The present invention refers to the field of the beverage discharge dispositions associated with beverage preparation machines and presenting discharge means for a first type of beverage, including coffee, and a second type of beverage, including a milk-based beverage.

The present invention further refers to a beverage preparation machine, in particular adapted so that can prepare a first type of beverage, for example coffee, based upon a portion of edible substance supplied to a brewing device, and a second type of milk-based beverage, as well as further refers to a process of operation of a machine for preparing beverages according to the present invention.

### Background of the invention

The prior art presents several solutions of beverage preparation machines with a first beverage discharge, for example espresso type coffee, and a second beverage discharge, for example milk, whereby said second beverage discharge is provided from a connection to an exterior recipient, in particular to an exterior milk recipient and adapted so that a flow is sucked from said exterior recipient by means of a pressurized flow flowing through said first discharge.

Document EP 1746920 B1 discloses a beverage preparation system of the type of the present invention, comprising a beverage preparation machine and a milk supply recipient, whereby the machine presents a discharge disposition comprising a first vapour discharge line and a second milk discharge line, whereby said second line is provided in connection with said milk supply recipient.

Documents EP 1785074 B1 and EP 2275010 B1 disclose discharge dispositions of the same type and comprising electronic means for flow regulation by means of a machine control unit.

Documents EP 0813834 B1 discloses a discharge disposition comprising mechanical means of flow regulation. Said mechanic means present several advantages in terms of simplicity and reliability.

Document EP 2189085 B1 discloses a frothing unit that can be removed as a unit, so that can be cleaned separately.

Document WO 2013/128323 A1 discloses a beverage preparation machine that presents a discharge disposition of the type of the present invention.

Document US 5738002 disclose a self-cleaning attachment for espresso coffee machine, for combining vapour, milk and air so as to produce hot frothed milk, whereby said attachment can be cleaned without being dismounted or disconnected from the espresso coffee machine, by means of reversal of the flow flux through the milk and air supply means.

Document US 2010/0199851 A1 discloses a milk carrying device, with a milk frothing disposition including a vapour supply, a cold milk supply and an ambient air supply similar to the present invention.

Document WO 2012/117399 A1 discloses a beverage preparation machine of the type of the present invention that comprises a beverage discharge that comprises an upstream mixture chamber and flow path, at least three beverage supply lines at least three previously defined temperatures into said chamber, and a controller for controlling the supply by each of said supply lines.

Document WO 2015/102126 discloses a device for producing a milk-based beverage, and associated with a beverage preparation machine that presents a removable flow connection with an exterior milk supply recipient.

Document US 2013/0019903 A1 discloses a beverage preparation machine of the type of the present invention that presents a flow regulation button of the frothed milk discharge flow that provides a continuous regulation of said flow by means of rotation around a central axis of said button.

Document EP 2497397 B1 relates to a milk container that can be associated with a dispenser of a flow of steam and/or water of a coffee machine, said milk container comprising a manifold body with a connecting conduit, a suction conduit of milk operating by Venturi effect, a suction conduit of air by Venturi effect, and a dispensing conduit, and further presenting a manually operated rotating organ for activation of regulation means of the air suction.

The simple and compact construction of the milk frothing means, the regulation of milk discharge flow, as well as the cleaning of those parts that contact with milk, are important problems in this type of beverage discharge disposition.

### General description of the invention

The objective of the present invention is to provide a beverage discharge disposition provided as front part of a beverage preparation machine and comprising means adapted for discharge of a first beverage type, in particular of aromatic beverages such as espresso-like coffee, and means adapted for frothing a liquid food product, in particular milk, said disposition presenting a simpler and more compact construction, in particular so that can be easily assembled and disassembled by a user so that can be periodically cleaned effortlessly, as well as simpler and more ergonomic milk flux regulation means from an exterior recipient, that can be ergonomically actuated by a user, in particular with a previously defined of options in terms of type of milk flux, including at least one option of frothed milk.

This objective is attained according with the present invention by means of a beverage discharge disposition according to claim 1.

Said beverage discharge disposition comprises a discharge casing that presents an attached part and a milk circulation disposition provided as a part that can be attached in removable manner to said attached part.

According to the invention, there is provided a beverage discharge disposition that presents milk flux regulation means adapted so that can be attached in removable manner together with the milk circulation disposition, in the attached part of discharge casing, and that can preferentially be connected in removable manner to an air valve disposition arranged inside of said milk circulation disposition and that provides air flow admission regulation.

It is advantageous that said milk flux regulation means are arranged next to and above of a connection of said milk circulation disposition with an exterior milk supply recipient.

The beverage discharge disposition according to the present invention comprises a discharge casing that provides discharge of a first and second type of beverages, and means associated with milk frothing including a vapour supply, generated by means upstream inside of the machine, a cold milk supply, supplied from an exterior milk recipient, and an ambient air supply, whereby said means provide and interaction between said flows and are provided on said discharge casing at a lateral region and with volume that is smaller than the volume of said discharge casing.

A related objective of the present invention is to provide a beverage preparation machine, in particular of aromatic beverages such as for example espresso-like coffee, comprising a brewing device adapted to collect a portion of edible substance, optionally provided inside of a capsule, and beverage discharge disposition adapted so as to provide a simpler, more compact and ergonomic construction.

This objective is attained by means of a machine according to claim 10.

Another objective of the present invention is to provide a process for preparing beverages that provides better conditions of ergonomic use.

This objective is solved according to claim 11.

### Description of the Figures

The invention shall hereinafter be explained in greater detail based upon preferred embodiments and in the attached Figures.

The Figures show, in simplified schematic representations:
- Figure 1:: perspective view of a beverage preparation machine presenting a preferred embodiment of beverage discharge disposition according to the present invention;
- Figure 2:: detail view of preferred embodiment of the beverage discharge disposition according to Figure 1;
- Figure 3:: exploded perspective view of the preferred embodiment of the beverage discharge disposition according to Figure 1;
- Figure 4:: exploded perspective view of the preferred embodiment of the beverage discharge disposition according to Figure 1;
- Figure 5:: cut front view of the preferred embodiment of the beverage discharge disposition according to Figure 1;
- Figure 6:: exploded perspective view of the air valve in the preferred embodiment of the beverage discharge disposition according to Figure 1.

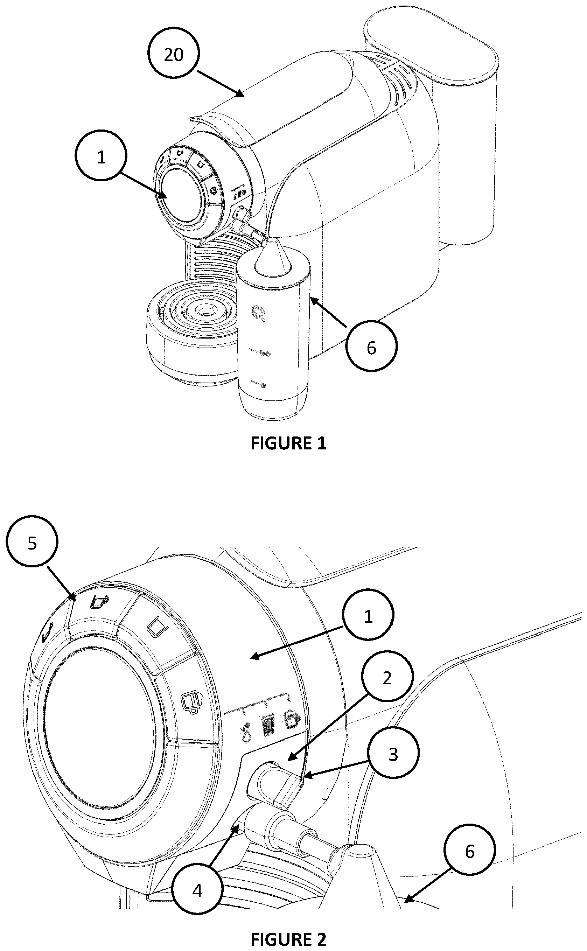

**Figure 1** represents a machine (20) for preparing beverages, including aromatic beverages, from an edible substance, such as for example espresso coffee, tea and similar, as well as a liquid food product that can be frothed, in particular milk.

The machine (20) is adapted for flow connection from a respective beverage discharge connection, said disposition including a discharge casing (1) that corresponds to the piece provided on the front region of said machine (20), and that provides discharge of at least two types of beverages into a recipient underneath thereof.

Said discharge casing (1) presents selection means (5) of beverage type on a front region above of said beverage discharge, and presents flow connection means provided so that can be removed, with a milk recipient (6) disposed outside of said machine (20).

Moreover, in particular, said machine (20) presents a preferred embodiment of a beverage discharge disposition according to the present invention, that comprises a discharge casing (1) of beverage discharge configured so that can be provided in the front region of said beverage preparation machine (20) and that provides a more ergonomic use, both in terms of selection of type of milk flow, as in terms of easy mounting and dismounting of the parts in contact with milk for periodic cleaning thereof, as shall be described in greater detail hereinafter.

As represented in **Figure 2****,** according to the invention, said discharge casing (1) comprises a milk circulation disposition (2) that presents selection means (3) of milk flux.

In particular, according to the invention, said selection means (3) of milk flux and said selection means (5) of beverage type are provided in different regions and planes of said discharge casing (1), whereby said selection means (3) of milk flux are preferentially provided on a lateral region of said discharge casing (1), and said selection means (5) of beverage type are provided on a front region of said discharge casing (1).

Moreover, it is preferred when said selection means (3) of milk flux are disposed on a region of said milk circulation disposition (2) next to and above of flow connection means, for example in a tube form, of said milk circulation disposition (2) to said milk supply recipient (6).

It is herewith advantageously provided a compact and ergonomic disposition of the main components associated with the regulation by the user of the type of milk flow and the milk supply from an exterior recipient.

It is further preferred that said selection means (3) of milk flux are adapted so that said milk flux selection means (3) are provided so that can be manually actuated between successive positions along an actuation plane that is at least approximately orthogonal relative to the front plane of said discharge casing (1).

Said milk flux selection means (3) are adapted so that provide a regulation of air flow, by means of said air valve disposition (10), in the interior of said milk circulation disposition (2) and therewith of the type of milk flow discharged downstream.

Advantageously in terms of usage, said selection means (3) of milk flux are provided so that can be moved along a previously defined path, preferentially around a respective rotation axis, between a plurality of at least two and up to five, preferentially up to three previously defined positions, thereby providing a corresponding variation of the type of discharge flow of said liquid food product to be frothed, whereby at least one position corresponds to a substantially continuous milk flow type and a second position corresponds to a substantially frothed milk flow type.

It is preferred when said milk flux selection means (3) are configured as a rotation button-like element, with side surfaces adapted for placing two opposing fingers so as to drive a rotation thereof.

It is further preferred when said milk flux selection means (3) are provided so that can be moved frontwards and backwards along said path, preferentially along at least one of:
- a linear extension, whereby said extension presents a dimension comprised between 1 and 4 cm, preferentially between 2 and 3 cm;
- an angular extension, whereby said angular extension corresponds to an angle bigger than 5° and smaller than 120°, preferentially bigger than 10° and smaller than 90°.

It is further preferred when there are provided graphic and/or acoustic signals associated with each one of said previously defined positions of said milk flux selection means (3), so that the user can recognize with type of flux is selected at each any given moment.

As further represented in Figure 2, according to the invention, said milk flux selection means (3) are provided on a lateral face of said discharge casing (1), whereas said beverage type selection means (5) are provided on a front face of said discharge casing (1).

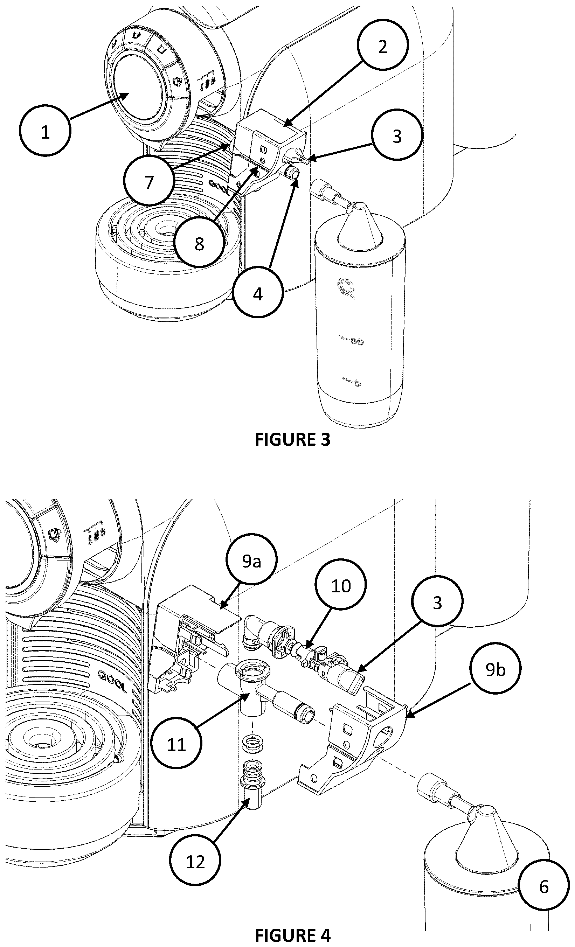

As one can better observe in **Figure 3****,** said discharge casing (1) presents a milk circulation disposition (2) that comprises milk flux selection means (3), a milk entry connection (4) adapted so that provides connection to said milk recipient (6), and a vapour entry connection (7) adapted for flow connection to water vapour supply means, beverage type selection means (5) provided on a different region from said milk circulation disposition (2) and presenting at least one option relative to the use of said liquid food product to be frothed, in particular, milk.

According to the invention, said discharge casing (1) presents a first part provided attached to the casing of said beverage preparation machine (20), and said milk circulation disposition (2) is provided so that can be manually mounted and dismounted on said attached part of discharge casing (1), thereby providing a removable attachment of all components that are in direct contact with milk to the remanding discharge casing (1), and removable flow connection of said vapour exit nozzle (13) with said second beverage discharge (12).

As shall be promptly understood, it is herewith advantageously provided the possibility of the user to remove all components that are exposed in direct contact with milk, provided in a particularly compact form, as a single joint arrangement, manually removable from the remanding discharge casing, so that enables its periodic cleaning in simple and rapid manner, as well as its placement in expedite and reliable manner.

According to a preferred embodiment, said milk circulation disposition (2) presents a plurality of components placed and removed as a single element, preferentially by means of pressured-fitting, in said attached part of discharge casing (1).

Moreover, it is preferred when said milk circulation disposition (2) is generally provided with a shape and dimension corresponding to a part that is similar or smaller than half the form and general dimension of said discharge casing (1) and that can be fitted on a lateral region of said attached part of the discharge casing (1).

It is preferred when said milk circulation disposition (2) is adapted so that can be placed onto, and removed from, a lateral portion of said attached part of discharge casing (1), by means of displacement in transversal manner relative thereto, preferentially by guiding means (8) provided in opposite regions, for example in lateral regions, and developing along at least part of the extension of said opposing regions of said milk circulation disposition (2), thereby providing establishing, and removal, of flow connection of said vapour entry connection (7) with said vapour exit nozzle (13) provided on said attached part of discharge casing (1) .

It is herewith provided the possibility of an easy disassembling and assembling of the milk circulation disposition (2) for the purpose of cleaning, as a single piece. In particular, said milk circulation disposition (2) is adapted so that can be placed for cleaning in a convention dish washing machine.

It is preferred when said vapour exit nozzle (13) is adapted for pressurized-fitting with a vapour entry connection (7) associated with the flow distribution disposition (11).

It is further preferred when said connection to the milk supply recipient (6) includes a milk entry connection (4) adapted for pressurized-fitting between a connection part of milk supply recipient (6) and a connection part of said discharge casing (1).

Moreover, it is preferred when said milk entry connection (4) is provided in flow connection with said milk supply recipient (6) by means of a connection that includes at least one location with possibility of rotation in several planes, preferentially including a spherical kneecap-like point, preferentially including a flexible tube (16) provided for sucking milk from said milk supply recipient (6).

According to the invention, as represented in **Figure 4****,** said milk circulation disposition (2) presents a first part (9a) adapted so as to provide support to said milk flux selection means (3) and to said milk entry connection (4), and preferentially configured so as to provide an exterior surface that develops in coherent manner in relation to the remanding exterior surface of said discharge casing (1) when said milk circulation disposition (2) is placed in said discharge casing (1), and further presents a second part (9b) adapted so as to provide support to said vapour entry connection (7), whereby said first and second structural parts (9a, 9b) are configured as elements that can be manually pressure-fitted with each other.

Said first and second structural parts (9a, 9b) are adapted so that support an air valve disposition (10), a flow distribution disposition (11) and a milk discharge (12), along a general upstream to downstream direction.

According to the invention, said milk circulation disposition (2) comprises a flow distribution disposition (11) adapted so that presents said milk entry connection (4) and said vapour entry connection (7), and that provides flow connection, by means of pressure fitting, with said air valve disposition (10), and with said second beverage discharge (12), whereby said flow distribution disposition (11) is retained in exterior walls of said first and second structural parts (9a, 9b).

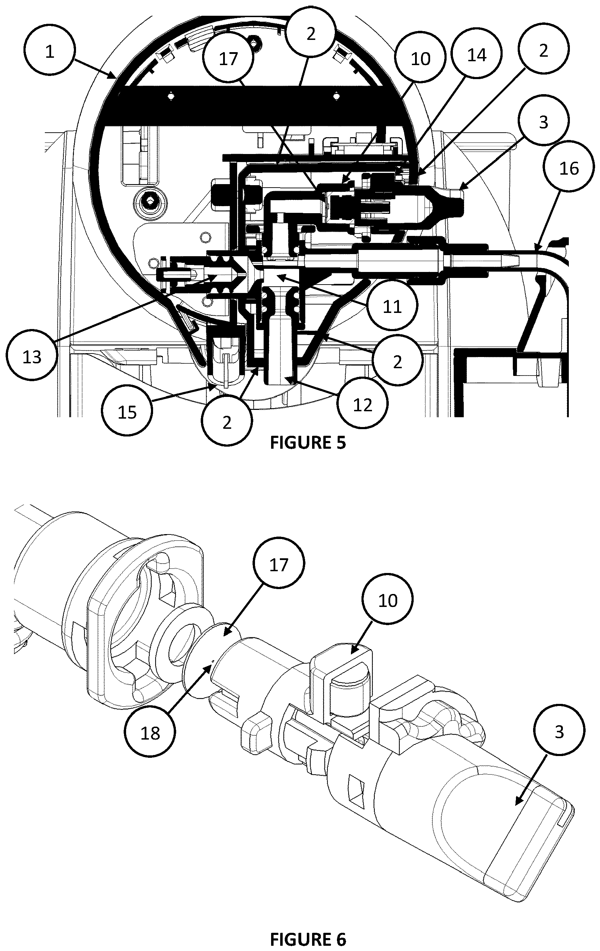

**Figure 5** shows an exploded perspective representation of the several components comprised in said milk circulation disposition (2).

According to an aspect not covered by the claims, said discharge casing (1) comprises a first fluid discharge line adapted for discharging a first type of beverage and provided in flow connection with an upstream pressurized fluid source, such as for example a pressure pump, and downstream with a first beverage discharge (15) and a second fluid discharge line. Said second fluid discharge line that comprises:
- a first fluid supply adapted for supplying vapour and provided in flow connection upstream with said pressurized fluid source and downstream with a vapour exit nozzle (13),
- a second fluid supply adapted for supplying air and that provides flow connection upstream with an air admission (14) associated with selection means (3) of milk flux that provide regulation of the air flow through an air valve disposition (10), and downstream with a flow distribution disposition (11),
- a third fluid supply adapted for supplying milk and that provides flow connection upstream with a milk supply recipient (6) provided outside of said beverage preparation machine, and downstream with said flow distribution disposition (11).

According to a preferred embodiment, said first, second and third fluid supplies, are provided in flow connection downstream, by means of said flow distribution disposition (11), with a second beverage discharge (12).

It is further preferred when said second and third fluid supplies and respective second fluid discharge (12) are provided so that can be flow connected by means of removable pressure-fitting connection of said flow distribution disposition (11) with said vapour entry connection (7), so that said second and third fluid supplies, flow distribution disposition (11) and second beverage discharge (12) can be jointly removed from connection with said first fluid supply.

**Figure 6** represents a detail of said air valve (10). According to the invention, said air valve disposition (10) comprises a regulation disk (17) of air flux that is provided in a metal, preferentially in a food grade metal alloy.

## Claims

1. **Beverage discharge disposition** adapted for frothing a liquid food product, in particular milk, comprising a discharge casing (1) provided in the front region of a beverage preparation machine (20), and that provides discharge of at least two types of beverages into a recipient underneath thereof, whereby said discharge casing (1) presents:
- an attached part associated to the casing of said beverage preparation machine (20) and that presents selection means (5) of beverage type, including a milk option, and a first beverage discharge (15) for discharge of a first beverage type, such as for example coffee; **characterized in that** said discharge casing (1) further presents:
- a second part that is removable from the discharge casing (1) and corresponds to a milk circulation disposition (2) providing removable flow connection to an exterior supply recipient (6) to said machine (20), presenting milk flux selection means (3) and comprising all components exposed to the milk circulation in said machine (20) including a second beverage discharge (12),
whereby said milk circulation disposition (2) is provided so that can be manually attached in removable manner on said attached part of discharge casing (1), so that said second beverage discharge (12) results next to said first beverage discharge (15) inside of said discharge casing (1),
whereby said milk circulation disposition (2) presents a first structural part (9a) adapted so as to provide support to said milk flux selection means (3) and to said milk entry connection (4), and further presents a second structural part (9b) adapted so as to provide support to a vapour entry connection (7), whereby said first and second structural parts (9a, 9b) are configured as elements that can be manually pressure-fitted with each other, and
whereby said first and second structural parts (9a, 9b) are adapted so that support one air valve disposition (10), one flow distribution disposition (11) and one milk discharge (12), along a general upstream to downstream direction,
whereby said milk circulation disposition (2) comprises one flow distribution disposition (11) adapted so that presents said milk entry connection (4) and said vapour entry connection (7), and that provides flow connection, by means of pressure fitting, with said air valve disposition (10), and with said second beverage discharge (12), whereby said flow distribution disposition (11) is retained in exterior walls of said first and second structural parts (9a, 9b),
whereby said milk flux selection means (3) are adapted so that provide a regulation of air flow, by means of said air valve disposition (10), inside of said milk circulation disposition (2), and thereby of the type of milk flow discharged through said second beverage discharge (12),
whereby said air valve disposition (10) comprises a regulation disc (17) of air flux, provided in a food grade metallic league, and
whereby said milk flux selection means (3) and said beverage type selection means (5) are provided in different regions and planes of said discharge casing (1), and whereby said milk flux selection means (3) are provided in a lateral region of said removable part of discharge casing (1), and said beverage type selection means (5) are provided on a frontal region of said attached part of discharge casing (1).

2. Disposition according to claim 1, **characterized in that** said milk flux selection means (3) are arranged on a region of said milk circulation disposition (2) next to and above of flow connection means, for example in the form of tube, of said milk circulation disposition (2) to said milk supply recipient (6).

3. Disposition according to claims 1 or 2, **characterized in that** said milk flux selection means (3) are provided so can be manually actuated between successive positions along an actuation plane that is at least approximately orthogonal relative to the front plane of said discharge casing (1).

4. Disposition according to claims 1 to 3, **characterized in that** said selection means (3) of milk flux are provided so that can be moved along a previously defined path, preferentially around a respective rotation axis, between a plurality of at least two and up to five, preferentially up to three previously defined positions, thereby providing a corresponding variation of the type of discharge flow of said liquid food product to be frothed, whereby at least one position corresponds to a substantially continuous milk flow type and a second position corresponds to a substantially frothed milk flow type.

5. Disposition according to any one of claims 1 to 4, **characterized in that** said milk circulation disposition (2) presents a plurality of components provided so that can be manually attached in removable manner with each other, preferentially by means of a pressured-fitting, including connection of said milk flux selection means (8) with said air valve disposition (10), and that can be jointly assembled on said attached part of discharge casing (1), and **in that** said milk circulation disposition (2) is generally provided with a shell part of coherent form with the remanding shell of the discharge casing (1) and with a volume that is smaller than half the volume of said discharge casing (1) and that can be fitted on a lateral region of said attached part of discharge casing (1).

6. Disposition according to any one of claims 1 to 5, **characterized in that** said milk circulation disposition (2) is adapted so that can be attached in removable manner to a lateral portion of said attached part of discharge casing (1), by means of displacement in transversal manner relative thereto, preferentially by guiding means (8) provided in opposite regions, and developing along at least part of the extension of said opposite regions of said milk circulation disposition (2), thereby providing establishing and removal of flow connection of said vapour entry connection (7) with said vapour exit nozzle (13) upstream.

7. Disposition according to any one of claims 1 to 6, **characterized in that** said milk circulation disposition (2) presents a first part (9a) configured so as to provide an exterior surface that develops in coherent manner in relation to the remanding exterior surface of said discharge casing (1) when said milk circulation disposition (2) is placed in said discharge casing (1).

8. Disposition according to any of previous claims, **characterized in that** said discharge casing (1) is provided so that confines:
- a first fluid discharge line adapted for discharge of a first type of beverage and provided in flow connection with an upstream pressurized flow source, such as for example a pressure pump, and with a downstream first beverage discharge (15);
- a second fluid discharge line for discharge of milk and that comprises:
∘ a first fluid supply adapted for supplying vapour and provided in flow connection upstream with said pressurized fluid source and downstream with a vapour exit nozzle (13),
∘ a second fluid supply adapted for supplying air and that provides flow connection upstream with an air admission (14) associated with selection means (3) of milk flux that provide regulation of the air flow through an air valve disposition (10), and downstream with a flow distribution disposition (11),
∘ a third fluid supply adapted for supplying milk and that provides flow connection upstream with a milk supply recipient (6) provided outside of said beverage preparation machine, and downstream with said flow distribution disposition (11),
whereby said first, second and third fluid supplies, are provided in flow connection downstream, by means of said flow distribution disposition (11), with a second beverage discharge (12), and
whereby said second and third fluid supplies and respective second fluid discharge (12) are provided so that can be flow connected by means of removable pressure-fitting connection of said flow distribution disposition (11) with said vapour entry connection (7), so that said second and third fluid supplies, flow distribution disposition (11) and second beverage discharge (12) can be jointly removed from connection with said first fluid supply.

9. Disposition according to any of previous claims, **characterized in that** said vapour exit nozzle (13) is adapted for pressure-fitting with a vapour entry connection (7) associated with said flow distribution disposition (11), and **in that** said connection to the milk supply recipient (6) includes the milk entry connection (4) adapted for pressure-fitting between a connection part of milk supply recipient (6) and a connection part of said discharge casing (1).

10. **Machine for preparing beverages,** such as for example aromatic beverages, from an edible substance, **characterized in that** includes a beverage discharge disposition according to any one of previous claims 1 to 9.

11. **Process** for preparing a beverage including the steps:
- providing a beverage preparation machine (20), or similar apparatus, presenting a flow pressurization device, at least one brewing device adapted so that can collect a single portion of edible substance inside thereof and at least one beverage discharge disposition to any one of previous claims 1 to 9,
- connecting said milk circulation disposition (2) to a milk supply recipient (6), preferentially by means of a tube;
- selecting the milk option amongst the options provided by said beverage type selection means (5);
- manually selecting an option amongst at least three and at most five options provided by said milk flux selection means (3), by means of a movement, preferentially a rotation movement, of said milk flux selection means (3) between a first position and a second position corresponding to the desired option;
- actuating the start of the cycle of beverage preparation operation.

12. Process according to claim 11, **characterized in that** further includes the following steps:
- manually disassembling the milk circulation disposition (2) from said discharge casing (1) by means of outwards and sideways sliding from said attached part of discharge casing (1);
- cleaning the milk circulation disposition (2);
- manually assembling the milk circulation disposition (2) by means of inwards and sideways sliding into a respective opening on said attached part of discharge casing (1).

## Patentansprüche

1. **Getränkeentladungeinrichtung** angepasst zum Schäumen eines flüssigen Nahrungsmittels, insbesondere Milch, umfassend ein Entladungsgehäuse (1) bereitgestellt im Frontbereich einer Getränkezubereitungsmaschine (20) und das Entladung von mindestens zwei Getränkearten in das Behälter unterhalb davon bereitstellt, wobei genanntes Entladungsgehäuse (1) aufweist:
- ein angefügtes Teil verbunden mit dem Gehäuse von genannter Getränkezubereitungsmaschine (20) und Auswahlmittel (5) einer Getränkeart aufweist, einschließlich einer Milchoption, und einer ersten Getränkeentladung (15) zur Entladung einer ersten Getränkeart, wie z.Bsp. Kaffee; **dadurch gekennzeichnet, dass** genanntes Entladungsgehäuse (1) weiterhin aufweist:
- ein zweites Teil, das vom Entladungsgehäuse (1) entfernbar ist und einer Milchumlaufeinrichtung (2) entspricht, bereitstellend entfernbare Durchflussverbindung zu einem Außenversorgungsbehälter (6) zu genannter Maschine (20), aufweisend Milchfließauswahlmittel (3) und umfassend alle Komponente dem Milchumlauf ausgesetzt in genannter Maschine (20), einschließlich einer zweiten Getränkeentladung (12),
wobei genannte Milchumlaufeinrichtung (2) so bereitgestellt ist, um auf genanntem angefügten Teil des Entladungsgehäuses (1) manuell angefügt zu werden, so dass sich genannte zweite Getränkeentladung (12) neben genannter ersten Getränkeentladung (15) innerhalb genanntem Entladungsgehäuse (1) ergibt,
wobei genannte Milchumlaufeinrichtung (2) ein erstes Strukturteil (9a) so angepasst aufweist, um genannte Milchfließauswahlmittel (3) und genannten Milchzugangsanschluss (4) zu stützen, und weiterhin ein zweites Strukturteil (9b) so aufweist, um genannten Dampfzugangsanschluss (7) zu stützen, wobei genannte erste und zweite Strukturteile (9a, 9b) als Elemente festgelegt sind, um manuell miteinander druckeingebaut zu werden, und
wobei genannte erste und zweite Strukturteile (9a, 9b) so angepasst sind, um eine Luftventileinrichtung (10), eine Fließverteilungseinrichtung (11) und eine Milchentladung (12) zu stützen, entlang einer allgemeinen Richtung stromaufwärts bis stromabwärts,
wobei genannte Milchumlaufeinrichtung (2) eine Fließverteilungseinrichtung (11) so angepasst umfasst, um genannten Milchzugangsanschluss (4) und genannten Dampfzugangsanschluss (7) aufzuweisen, und Fließverbindung bereitstellt, vorzugsweise mittels Druckformteil, mit genannter Luftventileinrichtung (10), und mit genannter zweiten Getränkeentladung (12), wobei genannte Fließverteilungseinrichtung (11) vorzugsweise in Außenwänden von genannten ersten und zweiten Strukturteile (9a, 9b) aufgestaut ist,
wobei genannte Milchfließauswahlmittel (3) so angepasst sind, um eine Luftfließregulierung bereitzustellen, mittels genannter Luftventileinrichtung (10), innerhalb genannter Milchumlaufeinrichtung (2), und dadurch von Milchfließart entladen durch genannte zweite Getränkeentladung (12),
wobei genannte Luftventileinrichtung (10) eine Luftfließregulierungsscheibe (17) umfasst, vorgesehen in einer Metalllegierung in Lebensmittelqualität, und
wobei genannte Milchfließauswahlmittel (3) und genannte Getränkeartauswahlmittel (5) in verschiedenen Bereichen und Ebenen von genanntem Entladungsgehäuse (1) bereitgestellt sind, und wobei genannte Milchfließauswahlmittel (3) in einem Seitenbereich von genanntem beweglichen Entladungsgehäuse (1) bereitgestellt ist, und genannte Getränkeartauswahlmittel (5) auf einem Vorderbereich von genanntem angefügtem Entladungsgehäuse (1) bereitgestellt sind.

2. Einrichtung gemäß Anspruch 1 **dadurch gekennzeichnet, dass** genannte Milchfließauswahlmittel (3) auf einem Bereich von genannter Milchumlaufeinrichtung (2) neben und oberhalb der Fließverbindungsmittel, z.Bsp. röhrenförmig, von genannter Milchumlaufeinrichtung (2) zu genanntem Milchversorgungsbehälter (6) vorgesehen sind.

3. Einrichtung gemäß Ansprüche 1 oder 2 **dadurch gekennzeichnet, dass** genannte Milchfließauswahlmittel (3) so bereitgestellt sind, um zwischen aufeinanderfolgenden Positionen entlang einer Betätigungsebene manuell getätigt zu werden, die mindestens annähernd winkelrecht bzgl. der Vorderebene von genanntem Entladungsgehäuse (1) ist.

4. Einrichtung gemäß Ansprüche 1 bis 3 **dadurch gekennzeichnet, dass** genannte Milchfließauswahlmittel (3) so bereitgestellt sind, um entlang einer vorher definierten Bahn zu bewegen, vorzugsweise um eine entsprechende Drehungsachse herum, zwischen einer Vielzahl von mindestens zwei bis zu fünf, vorzugsweise bis zu drei vorher definierten Positionen, wobei bereitstellend eine entsprechende Variation der Entladungsfließart von genanntem zu geschäumten Flüssigkeitsnahrungsprodukt, wobei mindestens eine Position einer wesentlich fortlaufenden Milchfließart und eine zweite Position einer wesentlich geschäumten Milchfließart entsprechen.

5. Einrichtung gemäß einer der Ansprüche 1 bis 4 **dadurch gekennzeichnet, dass** genannte Milchumlaufeinrichtung (2) eine Vielzahl an Komponenten so bereitgestellt aufweist, um entfernbar miteinander angefügt zu werden, vorzugsweise mittels eines Druckformteils, beinhaltend Verbindung von genannten Milchfließauswahlmitteln (8) mit genannter Luftventileinrichtung (10), und zusammen an angehängtem Teil des Entladungsgehäuses (1) aufgebaut zu werden, und dass genannte Milchumlaufeinrichtung (2) allgemein mit einem Muschelteil von einheitlicher Form mit dem restlichen Muschel des Entladungsgehäuses (1) und einem Volumen vorgesehen ist, das kleiner als die Hälfte des Volumens von genanntem Entladungsgehäuses (1) ist und auf einem Seitenbereich von genanntem angefügten Teil des Entladungsgehäuses (1) kann angepasst werden.

6. Einrichtung gemäß einer der Ansprüche 1 bis 5 **dadurch gekennzeichnet, dass** genannte Milchumlaufeinrichtung (2) so angepasst ist, um zu einer seitlichen Menge von genanntem angefügten Teil des Entladungsgehäuses (1) entfernbar angehängt zu werden, mittels schräger Versetzung bzgl. davon, vorzugsweise durch Führungsmittel (8) bereitgestellt in Gegenbereichen, und sich entwickelnd entlang mindestens teils der Ausdehnung genannter Gegenbereiche von genannter Milchumlaufeinrichtung (2), wobei bereitstellend Herstellung und Entnahme von Flussverbindung von genanntem Dampfzugangsanschluss (7) stromaufwärts mit genannter Dampfausgangsdüse (13).

7. Einrichtung gemäß einer der Ansprüche 1 bis 6 **dadurch gekennzeichnet, dass** genannte Milchumlaufeinrichtung (2) ein erstes Teil (9a) so festgelegt aufweist, um eine Außenoberfläche bereitzustellen, die sich einheitlich bzgl. der zurückhaltenen Außenoberfläche von genanntem Entladungsgehäuse (1) entwickelt, wenn genannte Milchumlaufeinrichtung (2) in genanntem Entladungsgehäuse (1) gestellt wird.

8. Einrichtung gemäß einer der vorigen Ansprüche **dadurch gekennzeichnet, dass** genanntes Entladungsgehäuse (1) so bereitgestellt ist, um zu begrenzen:
- eine erste Flüssigkeitsentladungslinie angepasst zur Entladung einer ersten Getränkeart und vorgesehen in Durchflussverbindung mit einer stromaufwärts unter Druck gesetzten Durchflussquelle, wie z.Bsp. eine Druckpumpe, und mit einer stromabwärts ersten Getränkeentladung (15);
- eine zweite Flüssigkeitsentladungslinie zur Milchentladung und umfassend:
* eine erste Flüssigkeitsversorgung angepasst zur Dampfversorgung und vorgesehen in Durchflussverbindung stromaufwärts mit genannter unter Druck gesetzten Durchflussquelle und stromabwärts mit einer Dampfausgangsdüse (13),
* eine zweite Flüssigkeitsversorgung angepasst zur Luftversorgung und die Durchflussverbindung stromaufwärts mit einem Luftzugang (14) bereitstellt, verbunden mit Auswahlmitteln (3) von Milchfluss, die Regulierung des Luftdurchflusses durch eine Luftventileinrichtung (10) bereitstellen, und stromabwärts mit einer Fließverteilungseinrichtung (11),
* eine dritte Flüssigkeitsversorgung angepasst zur Milchversorgung und die Durchflussverbindung stromaufwärts mit einem Milchversorgungsbehälter (6) bereitstellt, vorgesehen außerhalb von genannter Getränkezubereitungsmaschine, und stromabwärts mit genannter Fließverteilungseinrichtung (11),
wobei genannte erste, zweite und dritte Flüssigkeitsversorgungen in Durchflussverbindung stromabwärts vorgesehen sind mittels genannter Fließverteilungseinrichtung (11), mit einer zweiten Getränkeentladung (12), und
wobei genannte zweite und dritte Versorgungen und entsprechende zweite Durchflussentladung (12) so bereitgestellt sind, um mittels entfernbarer Druckverbindung von genannter Fließverteilungseinrichtung (11) mit genanntem Dampfzugangsanschluss (7) zu durchflussverbinden, so dass genannte zweite und dritte Flüssigkeitsversorgungen, Fließverteilungseinrichtung (11) und zweite Getränkeentladung (12) gemeinsam vom Anschluss mit genannter ersten Flüssigkeitsversorgung können entfernt werden.

9. Einrichtung gemäß einer der vorigen Ansprüche **dadurch gekennzeichnet, dass** genannte Dampfausgangsdüse (13) zum Druckformteil mit einem Dampfzugangsanschluss (7) angepasst ist, verbunden mit genannter Fließverteilungseinrichtung (11), und dass genannte Verbindung zum Milchversorgungsbehälter (6) den Milchzugangsanschluss (4) beinhaltet, angepasst zum Druckformteil zwischen einem Verbindungsteil des Milchversorgungsbehälters (6) und einem Verbindungsteil von genanntem Entladungsgehäuse (1).

10. **Maschine zur Zubereitung von Getränken,** wie z.Bsp. aromatische Getränke, von essbaren Substanzen, **dadurch gekennzeichnet, dass** sie eine Getränkeentladungseinrichtung gemäß einer der vorigen Ansprüche 1 bis 9 beinhaltet.

11. **Verfahren** zur Getränkezubereitung beinhaltend die Schritte:
- Bereitstellung einer Getränkezubereitungsmaschine (20) or ähnliches Gerät aufweisend ein Fließdruckgerät, mindestens ein Braugerät so angepasst, um eine Einzelmenge von essbarer Substanz innerhalb davon und mindestens eine Getränkeentladungseinrichtung gemäß einer der vorigen Ansprüche 1 bis 9 zu sammeln,
- Verbindung von genannter Milchumlaufeinrichtung (2) zu einem Milchversorgungsbehälter (6), vorzugsweise mittels eines Rohres;
- Auswahl der Milchoption unter den Optionen vorgesehen durch genannte Getränkeartauswahlmittel (5);
- manuelle Auswahl einer Option unter mindestens 3 und höchstens fünf Optionen vorgesehen durch genannte Milchfließauswahlmittel (3), mittels einer Bewegung, vorzugsweise einer Drehung, von genannter Milchfließauswahlmittel (3) zwischen einer ersten und einer zweiten Position entsprechend der gewünschten Option;
- Betätigung des Startzyklus der Getränkezubereitung.

12. Verfahren gemäß Anspruch 11 **dadurch gekennzeichnet, dass** weiterhin die folgenden Schritte beinhaltet:
- manuelle Zerlegung der Milchumlaufeinrichtung (2) von genanntem Entladungsgehäuse (1) mittels Außen- und Seitenschiebung von genanntem angefügten Teil des Entladungsgehäuses (1);
- Reinigung der Milchumlaufeinrichtung (2);
- manuelle Zerlegung der Milchumlaufeinrichtung (2) mittels Innen- und Seitenschiebung in eine entsprechende Öffnung von genanntem angefügten Teil des Entladungsgehäuse (1).

## Revendications

1. **Disposition de décharge de breuvage,** adaptée au moussage d'un produit alimentaire liquide, en particulier le lait, comprenant un boîtier de décharge (1) fourni dans la région frontale de la machine de préparation de breuvage (20) et qui fournit une décharge d'au moins deux types de breuvages à l'intérieur d'un récipient en dessous de celle-ci, où ledit boîtier de décharge (1) présente :
- une partie attachée associée au boîtier de ladite machine de préparation de breuvage (20) et qui présente des moyens de sélection (5) du type de breuvage, y compris une option lait et une première décharge de breuvage (15) pour la décharge d'un premier type de breuvage, tel que, par exemple du café ; **caractérisée par le fait que** ledit boîtier de décharge (1) présente en outre :
- une deuxième partie amovible du boîtier de décharge (1) et qui correspond à une disposition de circulation de lait (2) en fournissant une connexion amovible de débit vers un récipient d'alimentation extérieur (6) à ladite machine (20), en présentant des moyens de sélection de flux de lait (3) et en comprenant tous les composants exposés à la circulation de lait dans ladite machine (20), y compris une seconde décharge de breuvage (12),
où ladite disposition de circulation de lait (2) est fournie afin qu'elle puisse être manuellement attachée d'une manière amovible à ladite partie attachée du boîtier de décharge (1) afin que ladite seconde décharge de breuvage (12) finissent près de ladite première décharge de breuvage (15) à l'intérieur dudit boîtier de décharge (1),
où ladite disposition de circulation de lait (2) présente une première partie structurelle (9a) adaptée afin de fournie un support aux dits moyens de sélection de flux de lait (3) et à la dite connexion d'entrée de lait (4) et qui présente, en outre, une seconde partie structurelle (9b) adaptée afin de fournir un support à une connexion d'entrée de vapeur (7) où lesdites première et seconde parties structurelles (9a, 9b) sont configurées comme des éléments qui peuvent être manuellement adaptés à la pression entre eux et
où lesdites première et seconde parties structurelles (9a, 9b) sont adaptées afin de supporter une disposition de la valve d'air (10), une disposition de distribution de débit (11) et une décharge de lait (12), le long d'une direction générale de l'amont vers l'aval,
où ladite disposition de circulation de lait (2) comprend une disposition de distribution de débit (11) adaptée afin qu'elle présente ladite connexion d'entrée de lait (4) et ladite connexion d'entrée de vapeur (7) et qui fournit une connexion de débit, au moyen d'une adaptation de la pression avec ladite disposition de valve d'air (10) et avec ladite seconde décharge de breuvage (12), où ladite disposition de distribution de flux (11) est retenue dans des murs externes des dites première et seconde parties structurelles (9a, 9b),
où lesdits moyens de sélection du flux de lait (3) sont adaptés afin de fournir une régulation du débit d'air, au moyen de ladite disposition de la valve d'air (10), à l'intérieur de ladite disposition de circulation de lait (2) et donc du type de de débit de lait déchargé à travers ladite seconde décharge de breuvage (12),
où ladite disposition de valve d'air (10) comprend un disque de régulation (17) du flux d'air, fourni dans une alliance métallique de qualité alimentaire et
où lesdits moyens de sélection de flux de lait (3) et lesdits moyens de sélection du type de breuvage (5) sont fournis dans des régions et plans différents dudit boîtier de décharge (1) et où lesdits moyens de sélection de flux de lait (3) sont fournis dans une région latérale de ladite partie amovible du boîtier de décharge (1) et lesdits moyens de sélection du type de breuvage (5) sont fournis dans la région frontale de ladite partie attachée du boîtier de décharge (1).

2. Disposition selon la revendication 1, **caractérisée par le fait que** lesdits moyens de sélection du flux de lait (3) sont disposés dans une région de ladite disposition de circulation de lait (2) près et au-dessus des moyens de connexion de débit, par exemple, sous forme de tube, de ladite disposition de circulation de lait (2) vers ledit récipient d'alimentation en lait (6).

3. Disposition selon la revendication 1 ou 2, **caractérisée par le fait que** lesdits moyens de sélection du flux de lait (3) sont fournis afin d'être manuellement activés entre les successives positions le long d'un plan d'actionnement qui est, au moins, approximativement orthogonal par rapport au plan frontal dudit boîtier de décharge (1).

4. Disposition selon une quelconque revendication entre 1 et 3, **caractérisée par le fait que** lesdits moyens de sélection (3) du flux de lait sont fournis afin qu'ils puissent être déplacés le long d'un parcours défini préalablement, de préférence autour d'un axe de rotation respectif, entre une pluralité d'au moins deux et jusqu'à cinq, de préférence jusqu'à trois, positions préalablement définies, y fournissant une variation correspondante du type de débit de décharge dudit produit alimentaire liquide à faire mousser, où au moins une position correspond à un type de débit de lait substantiellement continu et où une seconde position correspond à un type de débit de lait substantiellement moussé.

5. Disposition selon une quelconque revendication entre 1 et 4, **caractérisée par le fait que** ladite disposition de circulation de lait (2) présente une pluralité de composants fournis afin qu'ils puissent être manuellement attachés d'une manière amovible entre eux, de préférence au moyen d'une adaptation pressurisée, y compris une connexion des dits moyens de sélection de flux de lait (8) avec ladite disposition de la valve d'air (10), et que peuvent être conjointement assemblés sur ladite partie attachée du boîtier de décharge (1) et **par le fait que** ladite disposition de circulation de lait (2) est généralement fourni avec une partie en coque d'une forme cohérente avec la coque restante du boîtier de décharge (1) et avec un volume inférieur à la moitié du volume dudit boîtier de décharge (1) et qui peut être adapté sur la région latérale de ladite partie attachée du boîtier de décharge (1).

6. Disposition selon une quelconque revendication entre 1 et 5, **caractérisée par le fait que** ladite disposition de circulation de lait (2) est adaptée afin qu'elle soit attachée d'une manière amovible à une portion latérale de ladite partie attachée du boîtier de décharge (1) au moyen de déplacement d'une manière transversale par rapport à celui-ci, de préférence au moyen de guidage (8) fournis sur des régions opposées et se développant le long d'au moins une partie de l'extension des dites régions opposées de ladite disposition de circulation de lait (2), en fournissant par ce biais un établissement et un retrait de connexion de débit de ladite connexion de l'entrée de vapeur (7) avec ladite buse de sortie de vapeur (13) en amont.

7. Disposition selon une quelconque revendication entre 1 et 6 **caractérisée par le fait que** ladite disposition de circulation de lait (2) présente une première partie (9a) configurée afin de fournir une surface extérieure qui se développe de manière cohérente par rapport à la surface extérieure restante dudit boîtier de décharge (1) lorsque ladite disposition de circulation de lait (2) est placée dans ledit boîtier de décharge (1).

8. Disposition selon une quelconque revendication précédente, **caractérisée par le fait que** ledit boîtier de décharge (1) est fourni afin qu'il circonscrive :
- une première ligne de décharge de fluide adaptée à la décharge d'un premier type de breuvage et fourni en connexion de débit avec une source de débit pressurisé en amont, telle que par exemple, une pompe à pression, et avec une première décharge de breuvage (15) en aval ;
- une seconde ligne de décharge de fluide pour la décharge de lait qui comprend :
∘ une première alimentation de fluide adaptée à l'approvisionnement en vapeur et fournie en connexion de débit en amont avec ladite source de fluide pressurisé et en aval, avec une buse de sortie de vapeur (13),
∘ une seconde alimentation de fluide adaptée à l'approvisionnement en air et qui fournit une connexion de débit en amont avec une admission d'air (14) associée à des moyens de sélection (3) de flux de lait qui fournit la régulation du débit d'air à travers une disposition de valve d'air (10) et en aval, avec une disposition de distribution de débit(11),
∘ une troisième alimentation en fluide adaptée à l'approvisionnement en lait qui fournit une connexion de débit en amont avec le récipient d'approvisionnement en lait (6), fourni à l'extérieur de ladite machine de préparation de breuvage et en aval, avec ladite disposition de distribution de débit (11),
où lesdites première, seconde et troisième alimentations en fluide sont fournies par une connexion de débit en aval, au moyen de ladite disposition de distribution de débit (11) avec une seconde décharge de breuvage (12) et
où lesdites seconde et troisième alimentations en fluide et la respective seconde décharge de fluide (12) sont fournies afin qu'elles soient connectées par le débit au moyen d'une connexion amovible adaptée à la pression à ladite disposition de distribution de débit (11) avec ladite de connexion d'entrée de vapeur (7) afin que lesdites seconde et troisième alimentations en fluide, la disposition de distribution de débit (11) et la seconde décharge de breuvage (12) puissent être conjointement retirées de la connexion avec ladite première alimentation de fluide.

9. Disposition selon une quelconque revendication précédente **caractérisée par le fait que** ladite buse de sortie de vapeur (13) est adaptée à l'adaptation de pression avec la connexion de l'entrée de vapeur (7) associée avec ladite disposition de distribution de débit (11) et **par le fait que** ladite connexion au récipient d'alimentation en lait (6) inclut la connexion de l'entrée de lait (4) adaptée à l'adaptation de pression entre la partie connexion du récipient d'alimentation en lait (6) et une partie connexion dudit boîtier de décharge (1).

10. **Machine de préparation de breuvages,** tels que par exemple, des breuvages aromatiques, à partir d'une substance comestible, **caractérisée par le fait qu'**elle inclut une disposition de décharge de breuvage selon une quelconque revendication précédente entre 1 et 9.

11. **Processus** de préparation d'un breuvage, incluant les étapes suivantes :
- Fourniture d'une machine de préparation de breuvage (20) ou d'un appareil similaire, présentant un dispositif de pressurisation de débit, au moins un dispositif de brassage adapté afin qu'il puisse recueillir une seule portion d'une substance comestible à l'intérieur de celle-ci et au moins une disposition de décharge de breuvage, à une quelconque revendication précédente entre 1 et 9,
- connexion de ladite disposition de circulation de lait (2) au récipient d'approvisionnement en lait (6), de préférence au moyen d'un tube ;
- sélection de l'option lait parmi les options fournies par lesdits moyens de sélection de type de breuvage (5) ;
- sélection manuelle d'une option parmi au moins trois et au plus, cinq options fournies par lesdits moyens de sélection de flux de lait (3), au moyen d'un mouvement, de préférence un mouvement de rotation, des dits moyens de sélection de flux de lait (3) entre une première position et une seconde position correspondant à l'option souhaitée ;
- actionnement du départ du cycle de l'opération de préparation de breuvage.

12. Processus selon la revendication 11, **caractérisé par le fait qu'**il inclut en outre les étapes suivantes :
- désassemblage manuel de la disposition de circulation de lait (2) dudit boîtier de décharge (1) au moyen de glissement vers l'extérieur et latéralement depuis ladite partie attachée du boîtier de décharge (1) ;
- nettoyage de la disposition de circulation de lait (2) ;
- Assemblage manuel de la disposition de circulation de lait (2) au moyen de glissement vers l'intérieur et latéralement sur une ouverture respective sur ladite partie attachée du boîtier de décharge (1).
